# EUROPÄISCHE PATENTSCHRIFT

(11) **EP 4 154 364 B1**
(45) Veröffentlichungstag und Bekanntmachung des Hinweises auf die Patenterteilung: **08.07.2026**
(21) Anmeldenummer: 21726580.0
(22) Anmeldetag: 10.05.2021
(51) Int. Cl.: H01R 43/02, H01R 4/02

(54) **VERFAHREN UND VORRICHTUNG ZUM VERSCHWEISSEN VON ZUMINDEST DREI KABELN MIT JE ZWEI AUS MANTELENDEN DER KABEL HERAUSRAGENDEN ADERN**
METHOD AND DEVICE FOR WELDING AT LEAST THREE CABLES EACH WITH TWO CORES PROTRUDING FROM CASING ENDS OF THE CABLE
PROCÉDÉ ET DISPOSITIF DE SOUDAGE D'AU MOINS TROIS CÂBLES COMPORTANT CHACUN DEUX NOYAUX FAISANT SAILLIE À PARTIR DES EXTRÉMITÉS D'ENVELOPPE DU CÂBLE

(30) Priorität: 20.05.2020 DE 102020113672
(43) Veröffentlichungstag der Anmeldung: 29.03.2023
(73) Patentinhaber: Lisa Dräxlmaier GmbH, 84137 Vilsbiburg (DE)
(72) Erfinder: LEHMANN, Lutz, Vilsbiburg 84137 (DE); KAPFENBERGER, Thomas, 84036 Kumhausen (DE)
(86) Internationale Anmeldenummer: PCT/EP2021/062302
(87) Internationale Veröffentlichungsnummer: WO 2021/233716

(56) Entgegenhaltungen:
- WO-A1-2019/076433
- US-A1- 2014 109 385
- US-A1- 2019 030 639
- US-B2- 9 496 670

## Beschreibung

### Technisches Gebiet

Die vorliegende Erfindung betrifft ein Verfahren und eine Vorrichtung zum Verschweißen von zumindest drei Kabeln mit je zwei aus Mantelenden der Kabel herausragenden Adern.

### Stand der Technik

Die vorliegende Erfindung wird im Folgenden hauptsächlich in Verbindung mit Kabeln für Fahrzeugbordnetze beschrieben. Die Erfindung kann aber für jede Anwendung genutzt werden, in der Kabel verbunden werden.

Ein Kabelbaum ist ein Bauteil in dem insbesondere elektrische Leitungen eines Fahrzeugs gebündelt sind. Der Kabelbaum kann Verzweigungen aufweisen, an denen ein Kabel Y-förmig oder X-förmig abzweigt. Diese Verzweigungen können unter Verwendung eines eigenen Verteilerbauteils ausgeführt werden, wobei gleichpolige Adern der Kabel jeweils über eine gemeinsame Stromschiene verbunden werden können.

Aus der Druckschrift WO 2019 076 433 A1 ist eine Vorrichtung und ein Verfahren zum Ultraschallverbinden von elektrischen Leitern, sowie eine Verwendung eines Schieberelements zum Ultraschallverbinden von Gruppen von Leitern bekannt.

Die Druckschrift US 2019 030 639 A1 betrifft eine Ultraschallschweißvorrichtung zum Verschweißen von stabförmigen elektrischen Leitern

### Beschreibung der Erfindung

Eine Aufgabe der Erfindung ist es daher, unter Einsatz konstruktiv möglichst einfacher Mittel ein verbessertes Verfahren und eine verbesserte Vorrichtung zum Verschweißen von zumindest drei Kabeln mit je zwei aus Mantelenden der Kabel herausragenden Adern bereitzustellen.

Die Aufgabe wird durch die Gegenstände der unabhängigen Ansprüche gelöst. Vorteilhafte Weiterbildungen der Erfindung sind in den abhängigen Ansprüchen, der Beschreibung und den begleitenden Figuren angegeben. Insbesondere können die unabhängigen Ansprüche einer Anspruchskategorie auch analog zu den abhängigen Ansprüchen einer anderen Anspruchskategorie weitergebildet sein.

Durch den hier vorgestellten Ansatz können drei mehradrige Kabel ohne zwischengeschaltetes Bauteil schnell und sicher elektrisch leitend zu einer Y-Verbindung miteinander verbunden werden. Ebenso können vier mehradrige Kabel ohne zwischengeschaltetes Bauteil schnell und sicher elektrisch leitend zu einer X-Verbindung miteinander verbunden werden.

Es wird ein Verfahren zum Verschweißen von zumindest drei Kabeln mit je zwei aus Mantelenden der Kabel herausragenden Adern vorgeschlagen, wobei abisolierte Aderenden der ersten Adern abwechselnd aus entgegengesetzten Richtungen übereinander zu einem ersten Stapel gestapelt werden und abisolierte Aderenden der zweiten Adern in einem Arbeitsabstand zum ersten Stapel abwechselnd aus den entgegengesetzten Richtungen übereinander zu einem zweiten Stapel gestapelt werden, der erste Stapel in einem Schweißbereich einer Schweißanlage angeordnet wird und zu einer ersten Schweißstelle verschweißt wird, während der zweite Stapel in einem um den Arbeitsabstand von dem Schweißbereich beabstandeten Wartebereich angeordnet wird, die erste Schweißstelle aus dem Schweißbereich entfernt wird und um den Arbeitsabstand in einen Lagerungsbereich bewegt wird, während der zweite Stapel aus dem Wartebereich entfernt wird und um den Arbeitsabstand in den Schweißbereich bewegt wird und zu einer zweiten Schweißstelle verschweißt wird

Ein Kabel kann mehrere elektrisch voneinander isolierte Adern aufweisen. Die Adern weisen dabei jeweils eine eigene Isolierung auf. Die Isolierung kann beispielsweise aus einem Kunststoffmaterial bestehen. Die Adern verlaufen innerhalb eines Mantels des Kabels. Der Mantel kann beispielsweise ebenfalls aus einem Kunststoffmaterial bestehen. In den Mantel kann eine elektrisch leitende Abschirmung des Kabels integriert sein. Die Abschirmung kann beispielsweise aus einem Metallmaterial, wie Aluminium bestehen. Die Abschirmung kann ein Geflecht sein. An einem Mantelende endet der Mantel des Kabels. Die Adern sind länger als der Mantel und ragen über das Mantelende hinaus. Die Adern können als elektrische Leiter metallische Litzen aufweisen. Die elektrischen Leiter können auch als Drähte ausgebildet sein. Die elektrischen Leiter können beispielsweise aus einer Kupferlegierung bestehen. An den abisolierten Aderenden beziehungsweise Enden der Adern ist die Isolierung von den elektrischen Leitern entfernt. Die elektrischen Leiter liegen an den abisolierten Aderenden also frei. Die Aderenden können im Wesentlichen gleich weit abisoliert sein.

Die Kabel können unter Verwendung einer Positioniervorrichtung positioniert werden. Die Kabel können in Fixiereinrichtungen eingelegt werden, die dazu ausgebildet sind, die Aderenden axial und lateral in dem Arbeitsraum zu positionieren. Die Positioniervorrichtung kann pro Kabel eine Fixiereinrichtung aufweisen, die eine Mantelaufnahme zum Fixieren des Mantelendes des jeweiligen Kabels und zwei Aderführungen zum Ausrichten der beiden Aderenden des Kabels im Arbeitsabstand aufweist. Die Mantelenden und/oder die Adern können in den Fixiereinrichtungen geklemmt werden. Die Aderenden können aus entgegengesetzten Richtungen in einen Arbeitsraum der Positioniervorrichtung ragen. Zum Positionieren von drei Kabeln können auf einer Seite des Arbeitsraums zwei der Fixiereinrichtungen angeordnet sein, während auf der gegenüberliegenden Seite des Arbeitsraums eine einzelne Fixiereinrichtung angeordnet ist. Die zwei Fixiereinrichtungen auf einer Seite können in einer Schweißposition übereinander angeordnet sein. Eine der Fixiereinrichtungen kann beweglich sein, um das Kabel in die andere Fixiereinrichtung einlegen zu können. Das erste Kabel kann zuerst eingelegt werden. Die Fixiereinrichtung mit dem eingelegten dritten Kabel kann auf die Fixiereinrichtung mit dem eingelegten ersten Kabel geklappt werden, nachdem das zweite Kabel eingelegt ist. Das Mantelende des dritten Kabels kann auf dem Mantelende des ersten Kabels angeordnet werden.

Aderenden von Adern eines vierten Kabels können aus der zweiten Seite aus in dem Arbeitsraum angeordnet werden. Das erste Aderende des vierten Kabels kann an dem ersten Stapel ausgerichtet werden und eine vierte Lage des ersten Stapels ausbilden. Das zweite Aderende des vierten Kabels kann an dem zweiten Stapel ausgerichtet werden und eine vierte Lage des zweiten Stapels ausbilden. Zum Positionieren von vier Kabeln können auf beiden Seiten des Arbeitsraums je zwei Fixiereinrichtungen angeordnet sein.

Die Positioniervorrichtung als Ganzes kann relativ zu einer Schweißanlage zumindest in zwei Achsen beweglich sein. Dazu kann die Positioniervorrichtung eine Bewegungseinrichtung aufweisen. Die Bewegungseinrichtung kann beispielsweise zwei Linearaktoren aufweisen, um die Stapel beziehungsweise die Schweißstellen relativ zu der Schweißanlage zu bewegen.

Die Schweißanlage kann eine Ultraschallschweißanlage sein. Ein Schweißbereich der Schweißanlage kann durch begrenzende Elemente der Schweißanlage definiert sein. Der Schweißbereich kann an vier Seiten begrenzende Elemente aufweisen. Der Schweißbereich kann also an zwei Seiten offen sein. Die Fixiereinrichtungen der Positioniervorrichtung können an den offenen Seiten des Schweißbereichs angeordnet sein. Die begrenzenden Elemente können beispielsweise relativ zum Schweißbereich oben, unten, vorne und hinten angeordnet sein. Die begrenzenden Elemente können als Amboss, als Schwinger beziehungsweise Sonotrode und als zwei Seitenschieber ausgeführt sein. Der Amboss und der Schwinger können den Schweißbereich auf gegenüberliegenden Seiten, also beispielsweise oben und unten begrenzen. Die Seitenschieber können an den zwei weiteren gegenüberliegenden Seiten des Schweißbereichs angeordnet sein. Die Seitenschieber können beispielsweise vorne und hinten an den Schweißbereich angrenzen. Die abisolierten Aderenden können aus den Fixiereinrichtungen von rechts und links in den Schweißbereich ragen.

Der Amboss und der Schwinger können relativ zueinander beweglich sein, um die dazwischen anordenbaren Aderenden zusammenzupressen. Der Schwinger kann Ultraschallschwingungen in die Aderenden einkoppeln und diese miteinander durch lokal entstehende Reibungswärme verschweißen. Die Seitenschieber können ein laterales Verrutschen beziehungsweise Ausweichen der Aderenden verhindern.

Zum Anordnen eines Stapels und zum Entnehmen der Schweißstelle kann zumindest eines der begrenzenden Elemente, also der Amboss, der Schwinger oder zumindest einer der Seitenschieber bewegt werden, um den Schweißbereich an zumindest einer der Seiten zu öffnen.

Ein Wartebereich kann eine Aussparung in einem der Seitenschieber der Schweißanlage sein. Der Wartebereich kann im vorderen oder hinteren Seitenschieber angeordnet sein. Ein Lagerungsbereich kann eine Aussparung in dem anderen Seitenschieber sein. Der Wartebereich kann ein größeres Volumen aufweisen als der Lagerungsbereich, da die Schweißstelle kleiner beziehungsweise kompakter als der Stapel ist. Der Wartebereich und der Lagerungsbereich können auch gleich groß sein. Dann können die Seitenschieber als Gleichteile ausgeführt sein. Die Aussparungen können U-förmig ausgeführt sein. Der Stapel beziehungsweise die Schweißstelle kann dann von einer offenen Seite der Aussparung in der jeweiligen Aussparung angeordnet werden.

Die Aderenden des ersten Kabels können von einer ersten Seite aus in dem Arbeitsraum angeordnet werden. Das erste Aderende des ersten Kabels kann in dem Arbeitsraum eine erste Lage des ersten Stapels ausbilden. Das zweite Aderende des ersten Kabels kann um den Arbeitsabstand beabstandet von dem ersten Aderende des ersten Kabels in dem Arbeitsraum angeordnet werden und eine erste Lage des zweiten Stapels ausbilden. Die Aderenden des zweiten Kabels können von einer der ersten Seite gegenüberliegenden zweiten Seite aus in dem Arbeitsraum angeordnet werden. Das erste Aderende des zweiten Kabels kann an dem ersten Stapel ausgerichtet werden und eine zweite Lage des ersten Stapels ausbilden. Das zweite Aderende des zweiten Kabels kann an dem zweiten Stapel ausgerichtet werden und eine zweite Lage des zweiten Stapels ausbilden. Die Aderenden des dritten Kabels können von der ersten Seite aus in dem Arbeitsraum angeordnet werden. Das erste Aderende des dritten Kabels kann an dem ersten Stapel ausgerichtet werden und eine dritte Lage des ersten Stapels ausbilden. Das zweite Aderende des dritten Kabels kann an dem zweiten Stapel ausgerichtet werden und eine dritte Lage des zweiten Stapels ausbilden. Der Schweißbereich kann in dem Arbeitsraum angeordnet sein. Der erste Stapel kann also in dem Schweißbereich gestapelt werden, während der zweite Stapel im Wartebereich gestapelt wird. Alternativ können die beiden Stapel außerhalb der Schweißanlage gestapelt werden und in fertigem Zustand zur Schweißanlage transportiert werden. Dann kann die Schweißanlage einen vorhergehenden Schweißvorgang ausführen, während die Stapel für den nächsten Schweißvorgang bereits gestapelt werden.

Die Aderenden des zweiten Kabels und des vierten Kabels können mit einem Seitenversatz an dem ersten Stapel und dem zweiten Stapel ausgerichtet werden. Durch den Seitenversatz können die Stapel geringfügig breiter sein. Durch den Seitenversatz kann eine Schweißfläche der Schweißstellen vergrößert werden. So kann ein Übergangswiderstand der Schweißstellen reduziert werden. Da die Aderenden im Wesentlichen einen runden Querschnitt aufweisen kann durch den Seitenversatz eine erhöhte Packungsdichte erreicht werden. So kann eine Dicke der Schweißstellen reduziert werden.

Die an den zwei Schweißstellen miteinander verschweißten Kabel können in einen Verpackungsbereich bewegt werden. Die Schweißstellen können in einem Verteilergehäuse angeordnet werden und voneinander elektrisch isoliert werden. Das Verteilergehäuse kann verschlossen werden, sodass es an den aus dem Verteilergehäuse ragenden Kabeln abdichtet. Der Schweißbereich kann automatisiert geräumt werden, um einen nachfolgenden Schweißvorgang auf derselben Schweißanlage zu ermöglichen.

Der hier vorgestellte Ansatz schafft ferner eine Vorrichtung, die dazu ausgebildet ist, um die Schritte einer Variante des hier vorgestellten Verfahrens in entsprechenden Einrichtungen durchzuführen, anzusteuern bzw. umzusetzen.

Die Vorrichtung ist ein elektrisches Gerät mit zumindest einer Recheneinheit zum Verarbeiten von Signalen oder Daten, zumindest einer Speichereinheit zum Speichern von Signalen oder Daten, und zumindest einer Schnittstelle und/oder einer Kommunikationsschnittstelle zum Einlesen oder Ausgeben von Daten, die in ein Kommunikationsprotokoll eingebettet sind. Die Recheneinheit kann beispielsweise ein Signalprozessor, ein sogenannter System-ASIC oder ein Mikrocontroller zum Verarbeiten von Sensorsignalen und Ausgeben von Datensignalen in Abhängigkeit von den Sensorsignalen sein. Die Speichereinheit kann beispielsweise ein Flash-Speicher, ein EPROM oder eine magnetische Speichereinheit sein. Die Schnittstelle kann als Sensorschnittstelle zum Einlesen der Sensorsignale von einem Sensor und/oder als Aktorschnittstelle zum Ausgeben der Datensignale und/oder Steuersignale an einen Aktor ausgebildet sein. Die Kommunikationsschnittstelle kann dazu ausgebildet sein, die Daten drahtlos und/oder leitungsgebunden einzulesen oder auszugeben. Die Schnittstellen können auch Softwaremodule sein, die beispielsweise auf einem Mikrocontroller neben anderen Softwaremodulen vorhanden sind.

### Kurze Figurenbeschreibung

Nachfolgend wird ein vorteilhaftes Ausführungsbeispiel der Erfindung unter Bezugnahme auf die begleitenden Figuren erläutert. Es zeigen:
Fig. 1 eine Darstellung einer Schweißanlage mit einer Positioniervorrichtung gemäß einem Ausführungsbeispiel;
Fig. 2 eine Darstellung einer Schweißanlage mit einer Positioniervorrichtung gemäß einem Ausführungsbeispiel; und
Fig. 3 eine Darstellung einer Schweißanlage mit Seitenschiebern gemäß einem Ausführungsbeispiel.

Die Figuren sind lediglich schematische Darstellungen und dienen nur der Erläuterung der Erfindung. Gleiche oder gleichwirkende Elemente sind durchgängig mit den gleichen Bezugszeichen versehen.

### Detaillierte Beschreibung

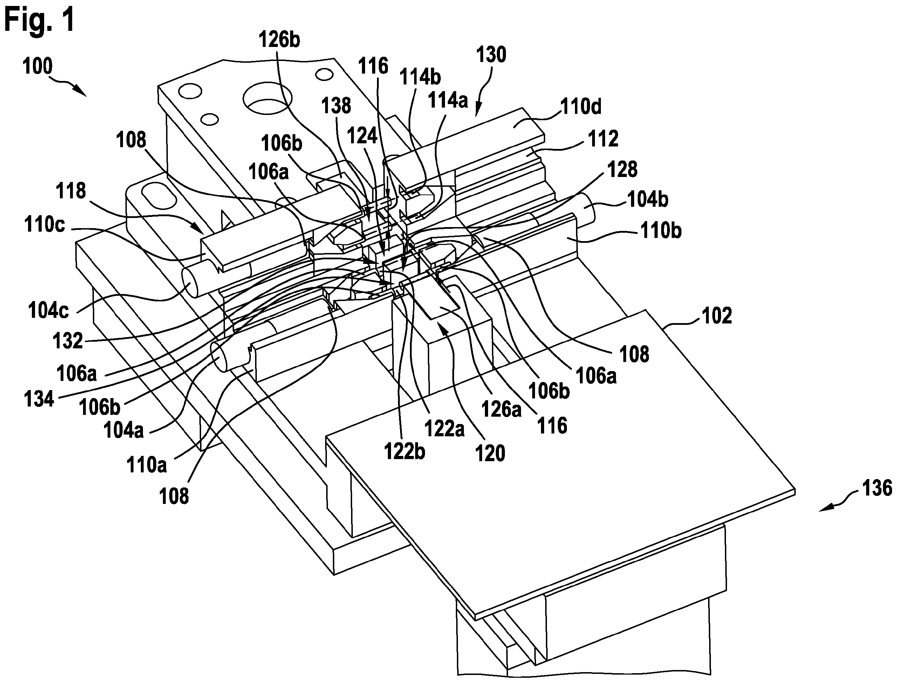

Zum leichteren Verständnis werden in der folgenden Beschreibung die Bezugszeichen zu den Figuren 1-3 als Referenz beibehalten.

Fig. 1 zeigt eine Darstellung einer Schweißanlage 100 mit einer Positioniervorrichtung 102 gemäß einem Ausführungsbeispiel. In der Schweißanlage 100 werden drei Kabel 104 miteinander verschweißt. Die Kabel 104 weisen je zwei Adern 106a, 106b auf. Alle ersten Adern 106a werden elektrisch leitend miteinander verbunden. Alle zweiten Adern 106b werden ebenfalls elektrisch leitend miteinander verbunden. Die ersten Adern 106a und die zweiten Adern 106b bleiben jedoch voneinander elektrisch isoliert. Die drei Kabel 104 werden zu einer Y-förmigen Verbindung oder Abzweigung verschweißt.

In der Schweißanlage 100 können auch vier Kabel 104 zu einer X-förmigen Verbindung verschweißt werden.

Die Positioniervorrichtung 102 ist dazu ausgebildet, die drei oder vier Kabel 104 mit ihren zwei aus Mantelenden 108 der Kabel 104 herausragenden Adern 106 für einen Schweißprozess der Schweißanlage 100 zu Positionieren. Die Positioniervorrichtung 102 weist pro Kabel 104 eine Fixiereinrichtung 110 mit einer Mantelaufnahme 112 zum Fixieren des Mantelendes 108 des jeweiligen Kabels 104, einer ersten Aderaufnahme 114a zum Ausrichten der ersten Ader 106a des jeweiligen Kabels 104 in einer Schichtebene und an einer ersten Stapelebene sowie zumindest einer zweiten Aderaufnahme 114b zum Ausrichten der zweiten Ader 106b des jeweiligen Kabels 104 in der Schichtebene und an einer um einen Arbeitsabstand 116 von der ersten Stapelebene beabstandeten zweiten Stapelebene auf.

Die Mantelaufnahmen 112 und die Aderaufnahmen 114 sind als Nuten ausgeführt. Die Kabel 104 sind mit den aus den Mantelenden 108 hervorstehenden Adern 106 lateral in die Nuten einlegbar. Die Mantelaufnahmen weisen je eine axiale Anschlagfläche für den Mantel des jeweiligen Kabels 104 auf. Die Aderaufnahmen 114 weisen an den Mündungen je eine laterale Führung für Isolierungen der jeweiligen Adern 106 auf. Die Mantelaufnahmen 112 und die Aderaufnahmen 114 können ein Untermaß aufweisen.

Die erste Fixiereinrichtung 110a ist auf einer ersten Seite 118 eines Arbeitsraums 120 der Positioniervorrichtung 102 angeordnet. Die Aderaufnahmen 114 der ersten Fixiereinrichtung 110a münden von der ersten Seite 118 des Arbeitsraums 120 aus in den Arbeitsraum 120 und sind in einer ersten Schichtebene angeordnet.

Das erste Kabel 104a ist in die erste Fixiereinrichtung 110a eingelegt. Die erste Ader 106a des ersten Kabels 104a ist in der ersten Aderaufnahme 114a der ersten Fixiereinrichtung 110a fixiert. Die Positioniervorrichtung 102 ist hier in einer ersten Arbeitsposition dargestellt. Ein abisoliertes Aderende 122 der ersten Ader 106a ist in der ersten Arbeitsposition in einem Schweißbereich 124 der Schweißanlage 100 angeordnet. Der Schweißbereich 124 wird durch zwei Seitenschieber 126 nach vorne und hinten begrenzt. Die erste Stapelebene ist mittig im Schweißbereich 124 angeordnet. Das erste Aderende 122a ist also zwischen den Seitenschiebern 126 angeordnet. Die zweite Ader 106b des ersten Kabels 104a ist in der zweiten Aderaufnahme 114b der ersten Fixiereinrichtung 110a fixiert. Ein abisoliertes Aderende 122 der zweiten Ader 106b ist in der ersten Arbeitsposition in einem Wartebereich 128 der Schweißanlage 100 angeordnet. Der Wartebereich 128 ist als U-förmige Aussparung im vorderen Seitenschieber 126a ausgeführt. Die zweite Stapelebene ist mittig im Wartebereich 128 angeordnet. Die Mitte des Wartebereichs 128 ist damit um den Arbeitsabstand 116 von der Mitte des Schweißbereichs 124 beabstandet. Die Aderenden 122 des ersten Kabels 104a sind in der ersten Schichtebene angeordnet und liegen auf einem Amboss der Schweißanlage 100 auf.

Die zweite Fixiereinrichtung 110b ist auf einer der ersten Seite 118 gegenüberliegenden zweiten Seite 130 des Arbeitsraums 120 angeordnet. Die Aderaufnahmen 114 der zweiten Fixiereinrichtung 110b münden von der zweiten Seite 130 des Arbeitsraums 120 aus in den Arbeitsraum 120 und sind in einer einen Höhenversatz zur ersten Schichtebene aufweisenden zweiten Schichtebene angeordnet.

Das zweite Kabel 104b ist in die zweite Fixiereinrichtung 110b eingelegt. Die erste Ader 106a des zweiten Kabels 104b ist in der ersten Aderaufnahme 114a der zweiten Fixiereinrichtung 110b fixiert. Ein abisoliertes Aderende 122 der ersten Ader 106a ist in der ersten Arbeitsposition der Positioniervorrichtung 102 in dem Schweißbereich 124 angeordnet. Die zweite Ader 106b des zweiten Kabels 104b ist in der zweiten Aderaufnahme 114b der zweiten Fixiereinrichtung 110b fixiert. Ein abisoliertes Aderende 122 der zweiten Ader 106b ist in der ersten Arbeitsposition in dem Wartebereich 128 angeordnet. Die Aderenden 122 des zweiten Kabels 104b sind in der zweiten Schichtebene angeordnet. Die Aderenden 122 des zweiten Kabels 104b und die Aderenden 122 des ersten Kabels 104a ragen aus entgegengesetzten Richtungen in den Schweißbereich 124 und den Wartebereich 128. Die Aderenden 122 des zweiten Kabels 104b und die Aderenden 122 des ersten Kabels 104a überlappen einander zu großen Teilen. Die ersten Aderenden 122a des ersten und zweiten Kabels 104a, 104b bilden einen ersten Stapel 132 aus. Die zweiten Aderenden 122b des ersten und zweiten Kabels 104a, 104b bilden einen zweiten Stapel 134 aus.

Die dritte Fixiereinrichtung 110c ist auf der ersten Seite 118 des Arbeitsraums 120 angeordnet. Die Aderaufnahmen 114 der dritten Fixiereinrichtung 110c münden von der ersten Seite 118 des Arbeitsraums 120 aus in den Arbeitsraum 120. Die dritte Fixiereinrichtung 110c ist hier in einer Einlegeposition dargestellt. In der Einlegeposition ist die dritte Fixiereinrichtung 110c näherungsweise um 90° aus einer Schweißposition aufgeklappt. Im aufgeklappten Zustand der Einlegeposition sind die Mantelaufnahmen 112 und die Aderaufnahmen 114 der ersten Fixiereinrichtung 110a und der dritten Fixiereinrichtung 110c zugänglich. In der Schweißposition sind die Aderaufnahmen 114 der dritten Fixiereinrichtung 110c in einer einen Höhenversatz zur zweiten Schichtebene aufweisenden dritten Schichtebene angeordnet.

Das dritte Kabel 104c ist in die dritte Fixiereinrichtung 110c eingelegt. Die erste Ader 106a des dritten Kabels 104c ist in der ersten Aderaufnahme 114a der dritten Fixiereinrichtung 110c fixiert. Die zweite Ader 106b des dritten Kabels 104c ist in der zweiten Aderaufnahme 114b der dritten Fixiereinrichtung 110c fixiert. Die Aderenden 122 des dritten Kabels 104c ragen aus der gleichen Richtung wie die Aderenden 122 des ersten Kabels 104a in den Arbeitsraum 120. In der Schweißposition und wenn die Positioniervorrichtung 102 in der ersten Arbeitsposition angeordnet ist, ist das erste Aderende 122a des dritten Kabels 104c im Schweißbereich 124 angeordnet und Teil des ersten Stapels 132, während das zweite Aderende 122b des dritten Kabels 104c im Wartebereich 128 angeordnet ist und Teil des zweiten Stapels 134 ist. Auch die Aderenden 122 des dritten Kabels 104c überlappen die Aderenden 122 des zweiten Kabels 104b und die Aderenden 122 des ersten Kabels 104a zu großen Teilen.

Die vierte optionale Fixiereinrichtung 110d ist auf der zweiten Seite 130 des Arbeitsraums 120 angeordnet. Die Aderaufnahmen 114 der vierten Fixiereinrichtung 110d münden von der zweiten Seite 130 des Arbeitsraums 120 aus in den Arbeitsraum 120. Die vierte Fixiereinrichtung 110d ist ebenfalls in einer Einlegeposition dargestellt und ist näherungsweise um 90° aus einer Schweißposition aufgeklappt. Im aufgeklappten Zustand der Einlegeposition sind die Mantelaufnahmen 112 und die Aderaufnahmen 114 der zweiten Fixiereinrichtung 110b und der vierten Fixiereinrichtung 110d zugänglich. In der Schweißposition sind die Aderaufnahmen 114 der vierten Fixiereinrichtung 110d in einer einen Höhenversatz zur dritten Schichtebene aufweisenden vierten Schichtebene angeordnet.

Die Höhenversätze sind hier alle gleich. Die Aderaufnahmen 114 der zweiten Fixiereinrichtung 110b sind in der Schweißposition der dritten Fixiereinrichtung 110c zwischen den Aderaufnahmen 114 der ersten und dritten Fixiereinrichtung 110a, 110c angeordnet. Die Aderaufnahmen 114 der dritten Fixiereinrichtung 110c sind in der Schweißposition der dritten und vierten Fixiereinrichtung 110c, 110d zwischen den Aderaufnahmen 114 der zweiten und vierten Fixiereinrichtung 110b, 110d angeordnet.

Das optionale vierte Kabel ist hier nicht in die vierte Fixiereinrichtung 110d eingelegt.

Die Positioniervorrichtung 102 weist eine Bewegungseinrichtung 136 auf. Die Bewegungseinrichtung 136 ist dazu ausgebildet, die Positioniervorrichtung 102 aus der ersten Arbeitsposition um den Arbeitsabstand 116 in eine zweite Arbeitsposition zu bewegen. In der ersten Arbeitsposition ist der erste Stapel 132 im Schweißbereich 124 angeordnet und wird von der Schweißanlage 100 zu einer ersten Schweißstelle verschweißt, während der zweite Stapel 134 im Wartebereich 128 angeordnet ist. In der zweiten Arbeitsposition ist der zweite Stapel 134 in dem Schweißbereich angeordnet und wird von der Schweißanlage 100 zu einer zweiten Schweißstelle verschweißt, während der zur ersten Schweißstelle verschweißte erste Stapel 132 in einem Lagerungsbereich 138 angeordnet ist. Der Lagerungsbereich 138 ist als U-förmige Aussparung im hinteren Seitenschieber 126b ausgeführt. Eine Mitte des Lagerungsbereichs 138 ist um den Arbeitsabstand 116 von der Mitte des Schweißbereichs 124 beabstandet.

Zumindest während des Schweißens sind der Amboss und der Schwinger so angeordnet, dass die Stapel 132, 134 von unten und oben gleichmäßig zusammengedrückt werden. Der Amboss und Schwinger können dazu in der Höhe bewegt werden. Eine Mitte zwischen dem Amboss und dem Schwinger wird dabei im Wesentlichen auf eine Mitte des jeweiligen Stapels 132, 134 eingestellt. Beim Verschweißen von drei Kabeln 104 wird die Mitte zwischen dem Amboss und dem Schwinger auf die zweite Schichtebene eingestellt. Beim Verschweißen von vier Kabeln 104 wird die Mitte zwischen dem Amboss und dem Schwinger auf eine Mitte zwischen der zweiten Schichtebene und der dritten Schichtebene eingestellt.

Die erste Fixiereinrichtung 110a und die zweite Fixiereinrichtung 110b sind fest mit der Bewegungseinrichtung 136 verbunden. Die Fixiereinrichtung 110c ist klappbar ausgeführt. In zugeklapptem Zustand sind die Aderaufnahmen 114 der dritten Fixiereinrichtung 110c in der dritten Schichtebene angeordnet. Die Nuten der ersten Fixiereinrichtung 110a sind in Richtung der dritten Fixiereinrichtung 110c ausgerichtet. Die Nuten der dritten Fixiereinrichtung 110c sind in zugeklappten Zustand in Richtung der ersten Fixiereinrichtung 110a ausgerichtet. Die Nuten der zweiten Fixiereinrichtung 110b sind in Richtung der vierten Fixiereinrichtung 110d ausgerichtet. Die Nuten der vierten Fixiereinrichtung 110d sind in zugeklappten Zustand in Richtung der zweiten Fixiereinrichtung 110b ausgerichtet. Die Kabel 104 sind im aufgeklappten Zustand der dritten und vierten Fixiereinrichtungen 110b, 110d einlegbar.

In einem Ausführungsbeispiel weisen die Aderaufnahmen 114 der ersten Fixiereinrichtung 110a und der dritten Fixiereinrichtung 110c je einen positiven Seitenversatz zu den Stapelebenen auf. Die Aderaufnahmen 114 der zweiten Fixiereinrichtung 110b und der vierten Fixiereinrichtung 110d weisen je einen negativen Seitenversatz zu den Stapelebenen auf.

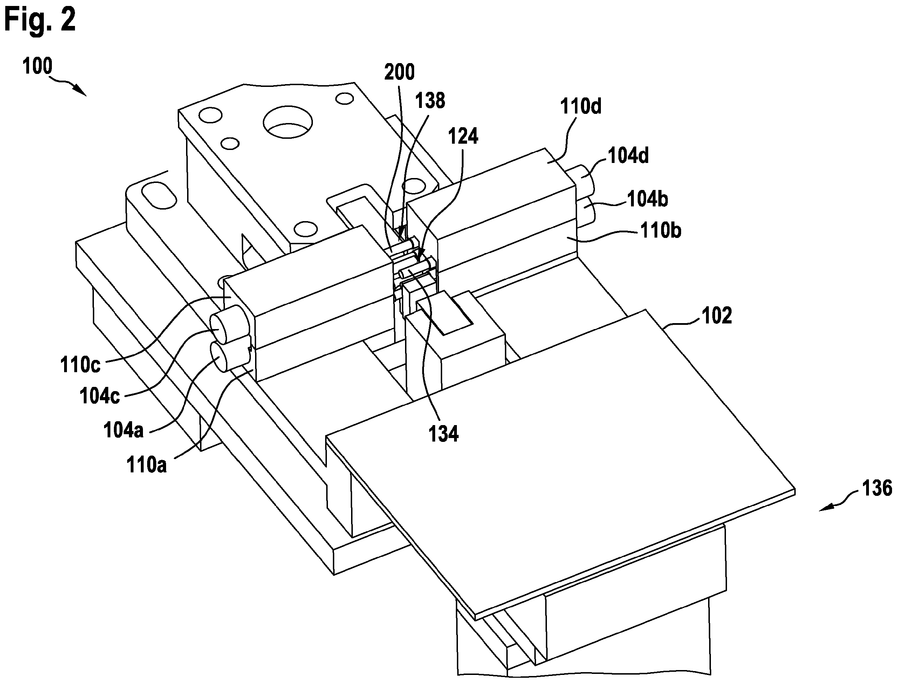

Fig. 2 eine Darstellung einer Schweißanlage 100 mit einer Positioniervorrichtung 102 gemäß einem Ausführungsbeispiel. Die Schweißanlage 100 entspricht dabei im Wesentlichen der Schweißanlage in Fig. 1. Im Gegensatz dazu ist hier das vierte Kabel 104d in die vierte Fixiereinrichtung 110d eingelegt und die dritte und Fixiereinrichtung 110c, 110d sind in der zugeklappten Schweißposition dargestellt. Zusätzlich ist der erste Stapel hier bereits zur ersten Schweißstelle 200 verschweißt worden und die Positioniervorrichtung 102 ist durch ihre Bewegungseinrichtung 136 aus der ersten Arbeitsposition in die zweite Arbeitsposition bewegt worden. Der zweite Stapel 134 ist hier also im Schweißbereich 124 angeordnet, während die erste Schweißstelle 200 im Lagerungsbereich 138 angeordnet ist.

Das dritte Kabel 104c liegt direkt auf dem ersten Kabel 104a auf. Das vierte Kabel 104d liegt direkt auf dem zweiten Kabel 104b auf.

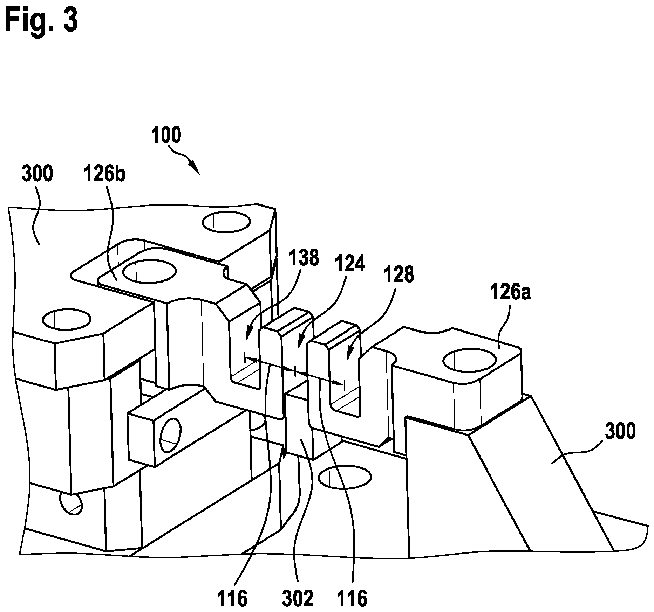

Fig. 3 eine Darstellung einer Schweißanlage 100 mit Seitenschiebern 126 gemäß einem Ausführungsbeispiel. Die Schweißanlage 100 entspricht im Wesentlichen der in den Fign. 1 und 2 dargestellten Schweißanlage. Im Gegensatz dazu sind die Seitenschieber 126 hier als Gleichteile ausgeführt. Dabei sind die Aussparungen zum Ausbilden des Wartebereichs 128 und des Lagerungsbereichs 138 gleich dimensioniert. Um Gleichteile verwenden zu können, ist hier ein Gestell 300 der Schweißanlage angepasst ausgeführt. Der hintere Seitenschieber 126b beinhaltet die Aussparung für das verschweißte Litzenbündel. Der vordere Seitenschieber 126a beinhaltet die Aussparung für die vorbereiteten Leitungen.

Die Schweißanlage 100 ist hier eine Ultraschallschweißanlage. Die Positioniervorrichtung ist hier nicht dargestellt. Der Schweißbereich 124 ist in betriebsbereitem Zustand der Schweißanlage 100 durch einen Schwinger und einen Amboss 302, sowie den vorderen Seitenschieber 126a und den hinteren Seitenschieber 126b definiert. Die Seitenschieber 126 weisen jeweils im Arbeitsabstand 116 zum Schweißbereich 124 die Aussparungen des Wartebereichs 128 und des Lagerungsbereichs 138 auf. Der Amboss 302 ist hier unterhalb des Schweißbereichs angeordnet und der Wartebereich 128 und der Lagerungsbereich 138 sind nach oben offen. Zumindest der Schwinger ist beweglich und hier nicht dargestellt. Dadurch weist der Schweißbereich 124 eine hier nach oben ausgerichtete Öffnung auf, durch die der jeweils zu verschweißende Stapel im Schweißbereich 124 angeordnet werden kann, während entweder der als zweites zu verschweißende Stapel aus der gleichen Richtung im Wartebereich 128 angeordnet werden kann, oder die bereits verschweißte erste Schweißstelle aus der gleichen Richtung im Lagerungsbereich angeordnet werden kann.

Zum Verlagern der ersten Schweißstelle aus dem Schweißbereich 124 in den Lagerungsbereich 138 wird der Schwinger zurückgezogen und der zweite Stapel und die gerade verschweißte erste Schweißstelle werden durch die Bewegungseinrichtung simultan nach oben aus dem Schweißbereich 124 beziehungsweise dem Wartebereich 128 ausgehoben, simultan um den Arbeitsabstand 116 in Richtung des Lagerungsbereichs 138 bewegt und simultan nach unten in den Lagerungsbereich 138 beziehungsweise den Schweißbereich abgesenkt.

Anschließend wird der Schwinger wieder in den Schweißbereich bewegt und der zweite Stapel zwischen dem Amboss 302 und dem Schwinger zusammengepresst und durch den Schwinger in Schwingungen versetzt, bis die Aderenden des zweiten Stapels so heiß geworden sind, dass sie unter Druck und Hitze zu der zweiten Schweißstelle verschweißt werden.

Mit anderen Worten wird eine Schweißvorrichtung zum Herstellen von achsensymmetrischen Litzenverbindungen beschrieben. Die Schweißvorrichtung kann zum Herstellen von Hochvoltverteilern oder ähnlichen Litzenbündeln verwendet werden. Durch den hier vorgestellten Ansatz kann ein starker Achsenversatz der Mantelleitungen relativ zur Schweißung vermieden werden, da bei der hier vorgestellten Litzenschweißanlagen die Schweißebene nach unten nicht durch das Schwingersystem mechanisch begrenzt ist. Die Leitungen können so symmetrisch in beiden Richtungen von der Schweißebene weg gestaffelt werden. Durch den daraus resultierenden geringen Achsenversatz kann eine bei herkömmlicher Herstellung entstehende Verkürzung der jeweils oberen Leitung vermieden werden. Zusätzlich können Schwierigkeiten bei der Montage vermieden werden. Insbesondere ist bei dem hier vorgestellten Ansatz eine exakte Positionierung der Einzelader der zweiadrigen Mantelleitung im Schweißraum möglich.

Bei der nach dem hier vorgestellten Ansatz hergestellten Leitungsanordnung zum Verbinden von vier Leitungen werden die linke und rechte untere Leitung nicht schwächer gebogen/belastet als die oberen Leitungen. Somit ergibt sich eine gleichmäßige Verteilung der Leitungen im Schweißbereich und folglich ein stabiler Schweißprozess.

Zusätzlich erzeugt eine gleichmäßige Einlegetiefe der Leitungen in den Schweißraum keine Schwankungen in der Schweißraumbefüllung. So können unregelmäßige Schweißungen durch beispielsweise Drahtüberstände oder Gratbildung vermieden werden. Aufgrund der konstanten Schweißraumbefüllungen ist eine Prozessüberwachung einfach und es ergibt sich ein geringes Prozessrisiko.

Da nach dem Schweißen des ersten Knotens die vier Leitungen nicht gedreht werden, um den zweiten Knoten zu schweißen, ist es nicht erforderlich, dass ein Bediener vier zwei Meter lange Leitungen inklusive Anbauteile, wie Kontakte, Dichtungen, Schächte, Halteteile etc. dreht und wieder im Schweißraum positioniert, wodurch eine geringe Fertigungsdauer erreicht werden kann.

Bei der hier vorgestellten Leitungsanordnung werden alle vier Leitungen gleich stark gebogen beziehungsweise belastet, da eine prognostizierte Mittelachse der Schweißung zwischen den oberen beiden Leitungen und den unteren beiden Leitungen angeordnet ist. Dadurch ergibt sich eine gleichmäßige Verteilung der Leitungen im Schweißbereich und folglich ein stabiler Schweißprozess.

Für den hier vorgestellten Ansatz kann eine spezielle U-Schallschweißmaschine (Wedge-Reed-System) ohne mechanische Begrenzung beiderseits der Schweißebene verwendet werden. Ferner werden spezielle Einlegemasken/Leitungsfixierungen zum exakten Positionieren und Fixieren der Einzelleitungen innerhalb des Schweißraums verwendet. Der Bediener klippst die Leitungen in Leitungsfixierungen. Durch eine spezielle Geometrie der Leitungsfixierungen werden die Positionen der Leitungen exakt definiert.

Die unteren zwei Leitungsfixierungen sind fest mit der beweglichen Grundplatte verbunden. Die oberen zwei Leitungsfixierungen werden um 90° zum Bediener hin geschlossen und verriegelt. Die Leitungsfixierungen dienen dazu, die Einzelandern der Mantelleitung in der richtigen Position und Länge in den Schweißraum ragen zu lassen.

Es wird ein Freiraum zum Zwischenlagern der Leitungen vor und hinter dem Schweißraum bereitgestellt. Vor dem Schweißraum lagern die noch zu verschweißenden Leitungen des zweiten Knotens während des Schweißens des ersten Knotens. Hinter dem Schweißraum lagert der verschweißte erste Knoten während des Schweißens des zweiten Knotens.

Wenn der hintere Knoten zuerst geschweißt wird, dient die Aussparung im hinteren Seitenschieber hinter dem Schweißbereich zur Lagerung des fertigen ersten Knotens, während die Aussparung im vorderen Seitenschieber vor dem Schweißbereich zur Lagerung der vier Einzeladern für den zweiten Knoten dient. Umgekehrt kann der vordere Knoten zuerst geschweißt werden, wobei dann die Aussparung im hinteren Seitenschieber zur Zwischenlagerung der vier Einzeladern für den zweiten Knoten dienen, während die Aussparung im vorderen Seitenschieber zur Lagerung des fertigen ersten Knotens dient.

Während des Prozesses führt die Maschine automatisiert die erste Schweißung durch, hebt anschließend die komplette Grundplatte mit den Leitungsfixierungen an und positioniert die komplette Grundplatte in der nächsten Schweißposition. Die Grundplatte kann nach dem vollständigen Verschweißen des zweiten Knotens in die Grundstellung oder in ein dafür vorgesehenes Gehäuse zurückfahren. Somit kann ein weiterer manueller Arbeitsschritt eingespart werden. Die Grundplatte kann pneumatisch oder elektrisch oder durch etwas Ähnliches bewegt werden.

Sensoren an den Leitungsfixierungen erkennen ob Leitung richtig eingelegt wurde. Sensoren, die sich links und rechts von der Maschine befinden, erkennen ob die Leitung richtig ausgedreht und positioniert wurde. Außerdem werden die Anbauteile abgefragt, ob sich z.B. die Dichtkappe etc. darauf befindet.

Anzeigeeinrichtungen an den Leitungsfixierungen dienen zur visuellen Bestätigung für den Bediener ob die Leitung in der richtigen Position ist. Beispielsweise kann eine grüne LED zur Anzeige verwendet werden.

Beispielsweise kann ein allgemeiner Ablauf in der Produktion damit beginnen, dass die vier Leitungen in die Leitungsfixierungen eingelegt werden und der Schweißprozess gestartet wird. Anschließend schweißt die Maschine den ersten Knoten. Optional erfolgt eine Prüfung des ersten Knotens. Dann wird die Vorrichtung angehoben und in die hintere Position gebracht und abgesetzt. Anschließend schweißt die Maschine den zweiten Knoten. Optional erfolgt eine Prüfung des zweiten Knotens. Nach dem Schweißprozess fährt die Vorrichtung in eine Grundstellung zum Entnehmen der Leitung. Alternativ bewegt die Vorrichtung die verschweißten Leitungen in das dafür vorgesehene Gehäuse. Abschließend werden die Leitungen entnommen. Falls bei einer der Prüfungen ein Fehler gefunden wird, sperrt die Maschine den Produktionsprozess. Spezialisiertes Fachpersonal kann die Maschine entsperren und das fehlerhafte Teil entfernen.

Der hier vorgestellte Ansatz ist für alle H oder Y Hochvoltverteiler anwendbar. Er ermöglicht eine drastische Reduzierung des Handlingsaufwandes mit einer einhergehenden Steigerung der Produktivität und einer wesentlichen Senkung des Prozessrisikos. Zusätzlich kann durch den hier vorgestellten Ansatz eine Erhöhung des Produktqualität erreicht werden.

Eine kürzere Taktzeit beziehungsweise Reduzierung der Fertigungszeit kann erreicht werden, da die zwei Schweißknoten teilautomatisiert gefertigt werden. Eine Reduzierung der Schlechtteile kann erreicht werden, da weniger Ausschuss produziert wird.

Es ergibt sich eine Entlastung des Bedieners da dieser die vier je zwei Meter langen Leitungen nicht mehr drehen muss. Ein prozesssicherer Ablauf kann dokumentiert werden, da jeder Schritt überwacht und protokolliert wird.

Zusammengefasst kann eine höhere Qualität des Schweißprozesses durch eine geringere Streuung des Prozesses erreicht werden. Das Produkt kann an der Schweißanlage zusammengebaut werden, indem zusätzliche Komponenten, wie ein Gehäuse montiert werden können.

Im Folgenden wird eine teilautomatisierte Fertigung beispielsweise an einer Sonobond-Anlage beschrieben.

Zuerst erfolgt eine Leitungsfixierung im Schweißbereich. Eine leichte Klemmung der Leitungen durch Untermaß, einen Federmechanismus, einen Klemmmechanismus, oder etwas ähnliches ist vorgesehen. Dabei kann eine Abfrage der Leitungsenden beziehungsweise Leitungskomponenten erfolgen.

Links und rechts von der Anlage befinden sich Formnester/Vorrichtungen, die mit Sensoren ausgestattet sind. In diese werden die kontaktierten Leitungsenden eingelegt. Über Meldeleuchten, die an den Vorrichtungen montiert sind, wird dem Bediener visuell dargestellt in welches Formnest und in welcher Reihenfolge er die Leitungen einlegen muss. Die Abfrage der Leitungsenden, sowie die zusätzlichen Leitungskomponenten, wie Hülse und/oder Dichtung, etc. wird über Sensoren und die Software realisiert. Diese Konfiguration kann für den X-Verbinder und Y-Verbinder separat eingestellt werden.

So ergibt sich ein erleichtertes Einlegen der Leitungen bei einer 100% Überwachbarkeit der Arbeitsschritte des Bedieners. Zusätzlich kann eine kürzere Produktionszeit pro Stück durch vorgegebene Arbeitsschritte erreicht werden.

Bei einer Fertigung eines X-Verbinders leuchtet/blinkt in einem ersten Schritt eine erste Meldeleuchte der Vorrichtung im linken Bereich der Anlage und symbolisiert die Freigabe zum Einlegen einer ersten Leitung. Der Bediener positioniert ein kontaktiertes Leitungsende der ersten Leitung in einer ersten Leitungsfixierung der Vorrichtung. Die zu verschweißende Seite der ersten Leitung wird in der ersten Leitungsfixierung positioniert und geklemmt. Wenn alle Bauteile der ersten Leitung richtig positioniert sind, wird automatisch der nächste Schritt eingeleitet.

In einem zweiten Schritt leuchtet/blinkt eine zweite Meldeleuchte der Vorrichtung im rechten Bereich der Anlage und symbolisiert die Freigabe zum Einlegen einer zweiten Leitung. Der Bediener positioniert ein kontaktiertes Leitungsende der zweiten Leitung in einer zweiten Leitungsfixierung der Vorrichtung. Die zu verschweißende Seite der zweiten Leitung wird in der zweiten Leitungsfixierung positioniert und geklemmt. Wenn alle Bauteile der zweiten Leitung richtig positioniert sind, wird automatisch der nächste Schritt eingeleitet.

In einem dritten Schritt leuchtet/blinkt eine dritte Meldeleuchte der Vorrichtung im linken Bereich der Anlage und symbolisiert die Freigabe zum Einlegen einer dritten Leitung. Der Bediener positioniert ein kontaktiertes Leitungsende der zweiten Leitung in einer dritten Leitungsfixierung der Vorrichtung. Die zu verschweißende Seite der dritten Leitung wird in der dritten Leitungsfixierung positioniert und geklemmt. Wenn alle Bauteile der dritten Leitung richtig positioniert sind, wird automatisch der nächste Schritt eingeleitet.

In einem vierten Schritt leuchtet/blinkt eine weitere Meldeleuchte an der dritten Leitungsfixierung und symbolisiert die Freigabe zum Schließen der dritten Leitungsfixierung. Der Bediener schließt die dritte Leitungsfixierung um 90° auf die untere erste Leitungsfixierung. Die nun obere dritte Leitungsfixierung wird durch einen Schließmechanismus, wie beispielsweise Rastnasen, eine Klemmschraube oder Ähnliches mit der unteren ersten Leitungsfixierung fixiert.

In einem fünften Schritt leuchtet/blinkt eine vierte Meldeleuchte der Vorrichtung im rechten Bereich der Anlage und symbolisiert die Freigabe zum Einlegen einer vierten Leitung. Der Bediener positioniert ein kontaktiertes Leitungsende der vierten Leitung in einer vierten Leitungsfixierung der Vorrichtung. Die zu verschweißende Seite der vierten Leitung wird in der vierten Leitungsfixierung positioniert und geklemmt. Wenn alle Bauteile der vierten Leitung richtig positioniert sind, wird automatisch der nächste Schritt eingeleitet.

In einem sechsten Schritt leuchtet/blinkt eine weitere Meldeleuchte an der vierten Leitungsfixierung und symbolisiert die Freigabe zum Schließen der vierten Leitungsfixierung. Der Bediener schließt die vierte Leitungsfixierung um 90° auf die untere zweite Leitungsfixierung. Die nun obere vierte Leitungsfixierung wird durch einen Schließmechanismus wie beispielsweise Rastnasen, eine Klemmschraube oder Ähnliches mit der unteren zweiten Leitungsfixierung fixiert.

In einem siebten Schritt werden die Litzenenden so fixiert, dass diese leicht versetzt übereinander positioniert sind. Das erste Litzenbündel wird sofort/zuerst im Schweißbereich positioniert. Das zweite Bündel wird im vorderen Seitenschieber in der passgenauen Aussparung positioniert. Die Aussparung ist so dimensioniert, dass während des ersten Schweißvorgangs das zweite Litzenbündel nicht beeinflusst wird. Nach dem Einlegen der vier Leitungen startet der Bediener den Prozess mit dem Start-Button.

Nach dem ersten Schweißvorgang wird in einem achten Schritt automatisch die komplette Vorrichtung in die zweite Schweißposition gebracht. Dies wird pneumatisch, elektrisch oder durch ähnliche lineare Bewegungen realisiert. Die exakte Positionierung der Leitungen kann beispielsweise durch einen Positionierungszylinder in Z-Richtung und einen Positionierungszylinder in X-Richtung erfolgen. Dabei folgen ein Anheben um 15 mm, ein um 12 mm nach Hinten versetzen und ein Absetzen um 15 mm aufeinander ab.

Wenn die Vorrichtung in der zweiten Schweißposition angeordnet ist, wird der zweite Schweißknoten in einem neunten Schritt automatisch verschweißt.

Da es sich bei der vorhergehend detailliert beschriebenen Vorrichtungen und Verfahren um Ausführungsbeispiele handelt, können sie in üblicher Weise vom Fachmann in einem weiten Umfang modifiziert werden, ohne den Bereich der Erfindung zu verlassen. Insbesondere sind die mechanischen Anordnungen und die Größenverhältnisse der einzelnen Elemente zueinander lediglich beispielhaft gewählt.

### BEZUGSZEICHENLISTE

- 100: Schweißanlage
- 102: Positioniervorrichtung
- 104: Kabel
- 104a: erstes Kabel
- 104b: zweites Kabel
- 104c: drittes Kabel
- 104d: viertes Kabel
- 106: Adern
- 106a: erste Ader
- 106b: zweite Ader
- 108: Mantelende
- 110: Fixiereinrichtungen
- 110a: erste Fixiereinrichtung
- 110b: zweite Fixiereinrichtung
- 110c: dritte Fixiereinrichtung
- 110d: vierte Fixiereinrichtung
- 112: Mantelaufnahme
- 114: Aderaufnahmen
- 114a: erste Aderaufnahme
- 114b: zweite Aderaufnahme
- 116: Arbeitsabstand
- 118: erste Seite
- 120: Arbeitsraum
- 122: Aderenden
- 122a: erstes Aderende
- 122b: zweites Aderende
- 124: Schweißbereich
- 126: Seitenschieber
- 126a: vorderer Seitenschieber
- 126b: hinterer Seitenschieber
- 128: Wartebereich
- 130: zweite Seite
- 132: erster Stapel
- 134: zweiter Stapel
- 136: Bewegungseinrichtung
- 138: Lagerungsbereich

- 200: erste Schweißstelle

- 300: Gestell
- 302: Amboss

## Patentansprüche

1. Verfahren zum Verschweißen von zumindest drei Kabeln (104) mit je zwei aus Mantelenden (108) der Kabel (104) herausragenden Adern (106), wobei abisolierte Aderenden (122) der ersten Adern (106a) abwechselnd aus entgegengesetzten Richtungen übereinander zu einem ersten Stapel (132) gestapelt werden und abisolierte Aderenden (122) der zweiten Adern (106b) in einem Arbeitsabstand (116) zum ersten Stapel (132) abwechselnd aus den entgegengesetzten Richtungen übereinander zu einem zweiten Stapel (134) gestapelt werden, der erste Stapel (132) in einem Schweißbereich (124) einer Schweißanlage (100) angeordnet wird und zu einer ersten Schweißstelle (200) verschweißt wird, während der zweite Stapel (134) in einem um den Arbeitsabstand (116) von dem Schweißbereich (124) beabstandeten Wartebereich (128) angeordnet wird, die erste Schweißstelle (200) aus dem Schweißbereich (124) entfernt wird und um den Arbeitsabstand (116) in einen Lagerungsbereich (138) bewegt wird, während der zweite Stapel (134) aus dem Wartebereich (128) entfernt wird und um den Arbeitsabstand (116) in den Schweißbereich (124) bewegt wird und zu einer zweiten Schweißstelle verschweißt wird.

2. Verfahren gemäß Anspruch 1, bei dem die Aderenden (122) des ersten Kabels (104a) von einer ersten Seite (118) aus in einem Arbeitsraum (120) angeordnet werden, wobei das erste Aderende (122a) des ersten Kabels (104a) in dem Arbeitsraum (120) eine erste Lage des ersten Stapels (132) ausbildet und das zweite Aderende (122b) des ersten Kabels (104a) um den Arbeitsabstand (116) beabstandet von dem ersten Aderende (122a) des ersten Kabels (104a) in dem Arbeitsraum (120) angeordnet wird und eine erste Lage des zweiten Stapels (134) ausbildet,
wobei die Aderenden (122) des zweiten Kabels (104b) von einer der ersten Seite (118) gegenüberliegenden zweiten Seite (130) aus in dem Arbeitsraum (120) angeordnet werden, wobei das erste Aderende (122a) des zweiten Kabels (104b) an dem ersten Stapel (132) ausgerichtet wird und eine zweite Lage des ersten Stapels (132) ausbildet, und das zweite Aderende (122b) des zweiten Kabels (104) an dem zweiten Stapel (134) ausgerichtet wird und eine zweite Lage des zweiten Stapels (134) ausbildet,
wobei die Aderenden (122) des dritten Kabels (104c) von der ersten Seite (118) aus in dem Arbeitsraum (120) angeordnet werden, wobei das erste Aderende (122a) des dritten Kabels (104c) an dem ersten Stapel (132) ausgerichtet wird und eine dritte Lage des ersten Stapels (132) ausbildet, und das zweite Aderende (122b) des dritten Kabels (104c) an dem zweiten Stapel (134) ausgerichtet wird und eine dritte Lage des zweiten Stapels (134) ausbildet.

3. Verfahren gemäß Anspruch 2, bei dem Aderenden (122) von Adern (106) eines vierten Kabels (104d) aus der zweiten Seite (130) aus in dem Arbeitsraum (120) angeordnet werden, das erste Aderende (122a) des vierten Kabels (104d) an dem ersten Stapel (132) ausgerichtet wird und eine vierte Lage des ersten Stapels (132) ausbildet und das zweite Aderende (122b) des vierten Kabels (104) an dem zweiten Stapel (134) ausgerichtet wird und eine vierte Lage des zweiten Stapels (134) ausbildet.

4. Verfahren gemäß einem der vorhergehenden Ansprüche, bei dem die Aderenden (122) des zweiten Kabels (104b) mit einem Seitenversatz an dem ersten Stapel (132) und dem zweiten Stapel (134) ausgerichtet werden.

5. Verfahren gemäß einem der vorhergehenden Ansprüche, bei dem die an den zwei Schweißstellen (200) miteinander verschweißten Kabel (104) in einen Verpackungsbereich bewegt werden, die Schweißstellen (200) in einem Verteilergehäuse angeordnet werden und voneinander elektrisch isoliert werden, wobei das Verteilergehäuse verschlossen wird, sodass es an den aus dem Verteilergehäuse ragenden Kabeln (104) abdichtet.

6. Verfahren gemäß einem der vorhergehenden Ansprüche, bei dem die Kabel (104) in Fixiereinrichtungen (110) eingelegt werden, die dazu ausgebildet sind, die Aderenden (122) axial und lateral zu positionieren.

7. Verfahren gemäß Anspruch 6, bei dem das erste Kabel (104a) zuerst eingelegt wird und die Fixiereinrichtung (110) mit dem eingelegten dritten Kabel (104c) auf die Fixiereinrichtung (110) mit dem eingelegten ersten Kabel (104a) geklappt wird, nachdem das zweite Kabel (104b) eingelegt ist.

8. Verfahren gemäß einem der Ansprüche 6 bis 7, bei dem die Mantelenden (108) und/oder die Adern (106) in den Fixiereinrichtungen (110) geklemmt werden.

9. Verfahren gemäß einem der vorhergehenden Ansprüche, bei dem das Mantelende (108) des dritten Kabels (104c) auf dem Mantelende (108) des ersten Kabels (104a) angeordnet wird.

10. Vorrichtung mit zumindest einer Recheneinheit zum Verarbeiten von Signalen oder Daten, zumindest einer Speichereinheit zum Speichern von Signalen oder Daten, und zumindest einer Schnittstelle und/oder einer Kommunikationsschnittstelle zum Einlesen oder Ausgeben von Daten, die in ein Kommunikationsprotokoll eingebettet sind, wobei die Vorrichtung dazu konfiguriert ist, das Verfahren gemäß einem der vorangehenden Ansprüche anzusteuern.

## Claims

1. Method for welding at least three cables (104) having in each case two cores (106) which protrude from sheath ends (108) of the cables (104), wherein core ends (122) stripped of insulation of the first cores (106a) are stacked one above the other from opposite directions in an alternating manner to form a first stack (132) and core ends (122) stripped of insulation of the second cores (106b) are, at a working distance (116) from the first stack (132), stacked one above the other from the opposite directions in an alternating manner to form a second stack (134), the first stack (132) is arranged in a welding region (124) of a welding installation (100) and is welded to form a first welded joint (200) while the second stack (134) is arranged in a standby region (128), which is spaced apart by the working distance (116) from the welding region (124), the first welded joint (200) is removed from the welding region (124) and is moved by the working distance (116) into a storage region (138) while the second stack (134) is removed from the standby region (128) and is moved by the working distance (116) into the welding region (124) and is welded to form a second welded joint.

2. Method according to Claim 1, in which the core ends (122) of the first cable (104a) are arranged in a working space (120) from a first side (118), wherein the first core end (122a) of the first cable (104a) in the working space (120) forms a first layer of the first stack (132) and the second core end (122b) of the first cable (104a) is arranged in the working space (120) so as to be spaced apart by the working distance (116) from the first core end (122a) of the first cable (104a) and forms a first layer of the second stack (134), wherein the core ends (122) of the second cable (104b) are arranged in the working space (120) from a second side (130), which is situated opposite the first side (118), wherein the first core end (122a) of the second cable (104b) is aligned with the first stack (132) and forms a second layer of the first stack (132) and the second core end (122b) of the second cable (104) is aligned with the second stack (134) and forms a second layer of the second stack (134), wherein the core ends (122) of the third cable (104c) are arranged in the working space (120) from the first side (118), wherein the first core end (122a) of the third cable (104c) is aligned with the first stack (132) and forms a third layer of the first stack (132) and the second core end (122b) of the third cable (104c) is aligned with the second stack (134) and forms a third layer of the second stack (134).

3. Method according to Claim 2, in which core ends (122) of cores (106) of a fourth cable (104d) are arranged in the working space (120) from the second side (130), the first core end (122a) of the fourth cable (104d) is aligned with the first stack (132) and forms a fourth layer of the first stack (132) and the second core end (122b) of the fourth cable (104) is aligned with the second stack (134) and forms a fourth layer of the second stack (134).

4. Method according to one of the preceding claims, in which the core ends (122) of the second cable (104b) are aligned with the first stack (132) and the second stack (134) so as to have a lateral offset.

5. Method according to one of the preceding claims, in which the cables (104) welded to one another at the two welded joints (200) are moved into a packaging region, the welded joints (200) are arranged in a distributor housing and are insulated electrically from one another, wherein the distributor housing is closed off so as to seal against the cables (104) that protrude from the distributor housing.

6. Method according to one of the preceding claims, in which the cables (104) are inserted into fixing devices (110) which are configured to axially and laterally position the core ends (122).

7. Method according to Claim 6, in which the first cable (104a) is inserted first and the fixing device (110) with the inserted third cable (104c) is folded onto the fixing device (110) with the inserted first cable (104a) after the second cable (104b) has been inserted.

8. Method according to either of Claims 6 and 7, in which the sheath ends (108) and/or the cores (106) are clamped in the fixing devices (110).

9. Method according to one of the preceding claims, in which the sheath end (108) of the third cable (104c) is arranged on the sheath end (108) of the first cable (104a).

10. Apparatus having at least one computing unit for processing signals or data, having at least one memory unit for storing signals or data, and having at least one interface and/or one communication interface for reading in or outputting data embedded in a communication protocol, wherein the apparatus is configured to execute the method according to one of the preceding claims.

## Revendications

1. Procédé de soudage d'au moins trois câbles (104) avec chacun deux brins (106) dépassant d'extrémités de gaine (108) des câbles (104), des extrémités de brin dénudées (122) des premiers brins (106a) étant empilées les unes au-dessus des autres en alternance à partir de directions opposées pour former un premier empilement (132), et des extrémités de brin dénudées (122) des seconds brins (106b) étant empilées les unes au-dessus des autres en alternance à partir des directions opposées pour former un deuxième empilement (134) à une distance de travail (116) du premier empilement (132), le premier empilement (132) étant disposé dans une zone de soudage (124) d'une installation de soudage (100) et étant soudé pour former un premier point de soudage (200), tandis que le deuxième empilement (134) est disposé dans une zone d'attente (128) espacée de la zone de soudage (124) de la distance de travail (116), le premier point de soudage (200) étant retiré de la zone de soudage (124) et déplacé dans une zone de stockage (138) de la distance de travail (116), tandis que le deuxième empilement (134) est retiré de la zone d'attente (128) et est déplacé de la distance de travail (116) dans la zone de soudage (124) et est soudé en un deuxième point de soudage.

2. Procédé selon la revendication 1, dans lequel les extrémités de brin (122) du premier câble (104a) sont disposées dans un espace de travail (120) à partir d'un premier côté (118), la première extrémité de brin (122a) du premier câble (104a) formant une première couche du premier empilement (132) dans l'espace de travail (120), et la seconde extrémité de brin (122b) du premier câble (104a) étant disposée dans l'espace de travail (120) de manière espacée de la première extrémité de brin (122a) du premier câble (104a) de la distance de travail (116) et formant une première couche du deuxième empilement (134), les extrémités de brin (122) du deuxième câble (104b) étant disposées dans l'espace de travail (120) à partir d'un deuxième côté (130) opposé au premier côté (118), la première extrémité de brin (122a) du deuxième câble (104b) étant alignée sur le premier empilement (132) et formant une deuxième couche du premier empilement (132), et la seconde extrémité de brin (122b) du deuxième câble (104) étant alignée sur le deuxième empilement (134) et formant une deuxième couche du deuxième empilement (134),
les extrémités de brin (122) du troisième câble (104c) étant disposées dans l'espace de travail (120) à partir du premier côté (118), la première extrémité de brin (122a) du troisième câble (104c) étant alignée sur le premier empilement (132) et formant une troisième couche du premier empilement (132), et la seconde extrémité de brin (122b) du troisième câble (104c) étant alignée sur le deuxième empilement (134) et formant une troisième couche du deuxième empilement (134).

3. Procédé selon la revendication 2, dans lequel des extrémités de brin (122) de brins (106) d'un quatrième câble (104d) sont disposées dans l'espace de travail (120) à partir du deuxième côté (130), la première extrémité de brin (122a) du quatrième câble (104d) étant alignée sur le premier empilement (132) et formant une quatrième couche du premier empilement (132), et la seconde extrémité de brin (122b) du quatrième câble (104) étant alignée sur le deuxième empilement (134) et formant une quatrième couche du deuxième empilement (134).

4. Procédé selon l'une des revendications précédentes, dans lequel les extrémités de brin (122) du deuxième câble (104b) sont alignées avec un décalage latéral sur le premier empilement (132) et le deuxième empilement (134).

5. Procédé selon l'une des revendications précédentes, dans lequel les câbles (104) soudés entre eux sur les deux points de soudage (200) sont déplacés dans une zone d'emballage, les points de soudage (200) sont disposés dans un boîtier de distributeur et sont isolés électriquement l'un de l'autre, le boîtier de distributeur étant fermé si bien qu'il assure l'étanchéité sur les câbles (104) dépassant du boîtier de distributeur.

6. Procédé selon l'une des revendications précédentes, dans lequel les câbles (104) sont insérés dans des systèmes de fixation (110) qui sont formés pour positionner axialement et latéralement les extrémités de brin (122).

7. Procédé selon la revendication 6, dans lequel le premier câble (104a) est inséré en premier lieu et le système de fixation (110) avec le troisième câble (104c) inséré est plié sur le système de fixation (110) avec le premier câble (104a) inséré après que le deuxième câble (104b) a été inséré.

8. Procédé selon l'une des revendications 6 à 7, dans lequel les extrémités de gaine (108) et/ou les brins (106) sont serrés dans les systèmes de fixation (110).

9. Procédé selon l'une des revendications précédentes, dans lequel l'extrémité de gaine (108) du troisième câble (104c) est disposée sur l'extrémité de gaine (108) du premier câble (104a).

10. Dispositif avec au moins une unité de calcul pour le traitement de signaux ou de données, au moins une unité de stockage pour le stockage de signaux ou de données, et au moins une interface et/ou une interface de communication pour la lecture ou la sortie de données qui sont incorporées dans un protocole de communication, le dispositif étant configuré pour piloter le procédé selon l'une des revendications précédentes.
